# EUROPEAN PATENT APPLICATION

(11) **EP 3 659 729 A1**
(43) Date of publication of application: **03.06.2020**
(21) Application number: 18209499.5
(22) Date of filing: 30.11.2018
(51) Int. Cl.: B22F 3/105, B65G 53/20, B33Y 30/00, B33Y 40/00

(54) **METHOD AND SYSTEM FOR CONVEYING A POWDER FOR ADDITIVE MANUFACTURING**

(71) Applicant: Siemens Aktiengesellschaft, 80333 München (DE)
(72) Inventor: Bogner, Jan Pascal, 13357 Aachen (DE)

(57) **Abstract**

A method of conveying a powder (P) for additive manufacturing is presented. The method comprises introducing a fluid (F) into a conveying channel (1), wherein the channel (1) connects a powder reservoir (PR) with a powder target (PT), and thereby fluidising a powder (1) retained in the powder reservoir (PR), and conveying the fluidised powder (P) through the channel (1) from the powder reservoir (PR) to the powder target (PT) in a powder-tight manner. Further, a corresponding system is presented.

## Description

The present invention relates to a method of conveying a powder for additive manufacturing of a component, particularly for powder bed based or powder bed fusion methods. Further, a system or arrangement for conveying the powder for additive manufacturing applications is presented.

Additive manufacturing techniques comprise e.g. powder bed methods, such as selective laser melting (SLM) or selective laser sintering (SLS) or electron beam melting (EBM).

An apparatus for additive manufacturing comprising a tank retaining a bed of a metal powder and a fluidising arrangement is, e.g., known from DE 10 2015 113 792 A1.

Additive manufacturing (AM) and/or powder bed fusion methods have proven to be useful and advantageous in the fabrication of prototypes or complex components, such as components with a mazelike or convoluted structure or functionally cooled components. AM approaches become more and more suitable and promising also for the industrialised manufacture of high-performance components, such as flow path hardware of a gas turbine, e.g. made of a nickel- or cobalt-based superalloy, particularly precipitation hardened alloys.

Further, the additive manufacture stands out for its short chain of process steps which in turn enables material economization and a particularly low lead time for the components.

Powder bed-based manufacturing methods, such as selective laser melting, are in principle known for fabricating, prototyping or manufacturing of parts or components from a powdery base material. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a recoater that moves, e.g. automatically, over the powder bed and removes excess material from a manufacturing plane or build space. Typical layer thicknesses usually amount to between 20 µm and 80 µm. During the manufacture, said laser beam scans over the surface and melts the powder on selected areas which may be predetermined by a CAD-file according to the geometry of the component to be manufactured.

In the course of significant advances in the industrialisation of additive manufacturing, particularly of powder bed fusion processes, also requirements for operational and/or environmental safety are expected to become ever stricter. Currently, there is still a lack of studies which describe mid- and long-term effects of small powder particles which are uptaken by an AM-operator of an AM machine, for instance. EHS-risks posed by human contact with metallic powder especially under long-term exposure are not yet sufficiently studied but need to be minimized.

For example, even though the processable powders have diameters in the micrometer range, e.g. between 20 µm and 40 µm, there may still exist a small fraction of nanosized particles which are easily dispersed or swirled, once a corresponding particle reservoir is fluidly connected (e.g. when manually conveyed or loaded) to the working space of an AM factory or plant. When such particles are uptaken in large amounts, there is a severe health risk, as the mentioned small particle fraction can possibly be resorbed by a human body or cell and even traverse the so-called blood-brain barrier and agglomerate in lymph nodes or the brain of an operator. As currently AM manufacturing capabilities are scaled up in today's industry, also the safety risks increase.

Transportation of metallic powders for additive manufacturing, e.g. from a storage unit to the machine is currently a manual process including various hazards. Said hazards and risks include impact of heavy powder containers during transportation as well as the mentioned risks of inhaling small powder particles while pouring the powder manually into a machine or container. Also, a breathing protection or protective clothing cannot solve the given problems adequately.

Currently these problems have not been solved acceptably, even though automated handling routes including robots and crane systems to transport powder containers are applied partly in conventional AM manufacturing research and industry. Even when an automated solution is given, any powder has still to be manually put into machine or an operator is at least obliged to stay in a contaminated working space, i.e. a space or area which is not fully sealed or protected.

It is an object of the present invention to provide means which help to overcome the problems, particularly to ease transportation or conveying of powder as a base material in additive manufacturing, advantageously without posing the issues of operational and health risks.

The mentioned object is achieved by the subject-matters of the independent claims. Advantageous embodiments are subject-matter of the dependent claims.

The term "additive" in the context of manufacturing shall particularly denote a layer-wise, generative and/or bottom-up manufacturing process. The additive manufacturing as described herein may be or relate to rapid prototyping.

An aspect of the present invention relates to a method of conveying a powder or powdery base material for additive manufacturing. Said method may be or be part of the supply chain or powder management for additive manufacturing applications.

Said method comprises introducing a fluid, preferably an inert gas, into a conveying or transportation channel or parts of said channel, wherein said channel, particularly a pipe-like channel, connects a powder reservoir with a powder target, such as an additive manufacturing device.

The method further comprises fluidising the powder retained in the powder reservoir, wherein said fluid may perfuse and swirl said powder.

The method further comprises conveying or flowing the fluidised powder through the channel from the powder reservoir to the powder target in a powdertight or closed manner.

The term "fluidise" or "fluidised" shall mean that via the perfusing with a fluid or gas, the powder preferably adopts fluid or liquid properties which help to convey or transport the powder, e.g. from the reservoir to the target.

The term "powder reservoir" shall denote any initial reservoir, e.g. a supply or container, wherein a large amount of powder can be retained, preferably the whole powder stock of or for an AM shop floor or plant facility. Said powder reservoir may e.g. be hold under cleanroom or particularly sealable conditions.

The term "powder target" may denote an interstation or a final destination of the powder, e.g. a machine-internal supply container or tank of a manufacturing device.

The presented solution may help to reduce so-called EHS hazards or operational and health risks significantly, as e.g. the whole shop floor can be maintained powder-free and e.g. only an initial powder reservoir must be equipped with special security measures. Any operator of the plant shop floor can thus remain outside of the powder reservoir and any health risk be excluded. In other words, the presented channel or pipe solution reduces environmental and human contact with a powder supply and renders manual transportation powder containers obsolete.

The present solution is, however, also advantageous with regard to the actual manufacturing process, as machine preparation time may be reduced, and increased performance is provided by the automated or improved powder conveyance. Further, complex and costly crane or robotic systems can be avoided in machine pathways of the shop floor which may further lower operational and safety risks.

In an embodiment the fluid is an inert gas, such as nitrogen or argon. This embodiment allows to maintain the chemical and/or compositional stability of the powdery material during transportation and/or during storage.

In an embodiment, the conveying of the powder is carried out downwards at a shallow or small angle with respect to a horizontal axis or plane. According to this embodiment, gravity can be exploited for the transportation and the fluid pressure to be introduced into the conveying channel can be hold at a moderate level.

In an embodiment, the fluid is introduced into the channel at a constant flow rate. According to this embodiment, the conveying can be carried out in a reproducible and reliable way.

In an embodiment, a conveying direction according to which the powder is conveyed or transported in the channel is oriented substantially orthogonal with respect to fluid flow direction, according to which the fluid is preferably guided or moved.

In an embodiment, during or after the conveying of the powder, the fluid is let out of the channel and reintroduced at a later point in time, thereby forming a closed-loop circulation. According to this embodiment, a fluid introduced into the channel can be reused as a transport medium. Further, this embodiment eases an implementation of a powder-tight system for conveying the powder from the reservoir to the target (see below).

A further aspect of the present invention relates to a system or arrangement for conveying the powder in additive manufacturing. The system comprises the conveying channel, wherein the conveying channel is configured for being connected to the powder reservoir and/or to the powder target.

In an embodiment, the system is a pipe system.

In an embodiment, the channel is further configured to form a fluidised bed via which the powder can be conveyed from the powder reservoir to the powder target, e.g. as described above.

In an embodiment, the channel or a corresponding pipe is configured to be engaged to the powder reservoir and/or the powder target via a push-fit and/or snap engagement means. Said connection means are expedient for maintaining the powder-tight operation of the system.

In an embodiment the system comprises a powder reservoir adapter and/or powder target adapter to which the channel is connected or connectable.

In an embodiment, the powder target adapter is arranged on a slightly lower gravitational potential as compared to the powder reservoir adapter, e.g. in order to allow for an easy flow or conveying of the powder (see above).

In an embodiment the channel is a connector for connecting the powder reservoir in the powder target.

In an embodiment, the channel is fluidly connected to a fluid inlet at the bottom of the channel. This embodiment is most expedient in order to generate a fluidised bed in the channel.

In an embodiment, the channel is fluidly connected to a fluid outlet at the top of the channel. The removal of fluid which has already been used for fluidising the powder in the channel via an upper outlet is expedient, as powder particles are preferably not perfused or swirled to the upper outlet but may sink or sediment again in the flow during the transportation.

In an embodiment, the inlet and/or the outlet, preferably each, comprise openings, with diameters of less than 10 µm, preferably less than 5 µm each. This embodiment allows to maintain the channel substantially powder-tight, as a majority of the powder particles can be enclosed by the channel walls and do not reach an ambient of the channel or the system.

In an embodiment, said inlet and/or outlet extend over largely the whole length of the channel.

In an embodiment, the channel is sealed against an environment by a filter and/or sealing means, e.g. for reducing completely preventing any operational or EHS risks. Said filter or sealing means are preferably configured to filter also a small particle fraction out of the powder or seal the channel's or the system's ambient also against such particles.

In an embodiment, the length of the channel defines a conveying or transport length over which the powder can be conveyed.

In an embodiment, the conveying length exceeds a distance of 5 m, preferably of 10 m, more preferably 20 m.

In an embodiment, the system comprises a powder reservoir and/or a powder target, wherein said powder reservoir and/or said powder target is as well configured to form a fluidised bed. This embodiment allows to ease the generation of a fluidised bed and therewith the conveyance of the powder from the reservoir to the channel.

A further aspect of the present invention relates to an additive manufacturing plant comprising the system as described, wherein the system comprises a plurality of channels for conveying powder from the powder reservoir to a plurality of powder targets, e.g. via a cross valve. According to this embodiment, a powder reservoir or supply may as well be comprised or provided by an AM manufacturing machine with an internal powder stock or supply cylinder.

Advantages and embodiments relating to the described method may as well pertain or be valid with regard to the system, and vice versa.

Further features, expediencies and advantageous embodiments become apparent from the following description of the exemplary embodiment in connection with the Figures.
Figure 1 shows a simplified sketch of the system for conveying a powder in additive manufacturing according to the present invention.
Figure 2 shows a simplified sketch of an additive manufacturing plant or shop floor, wherein the system shown in Figure 1 is applied.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

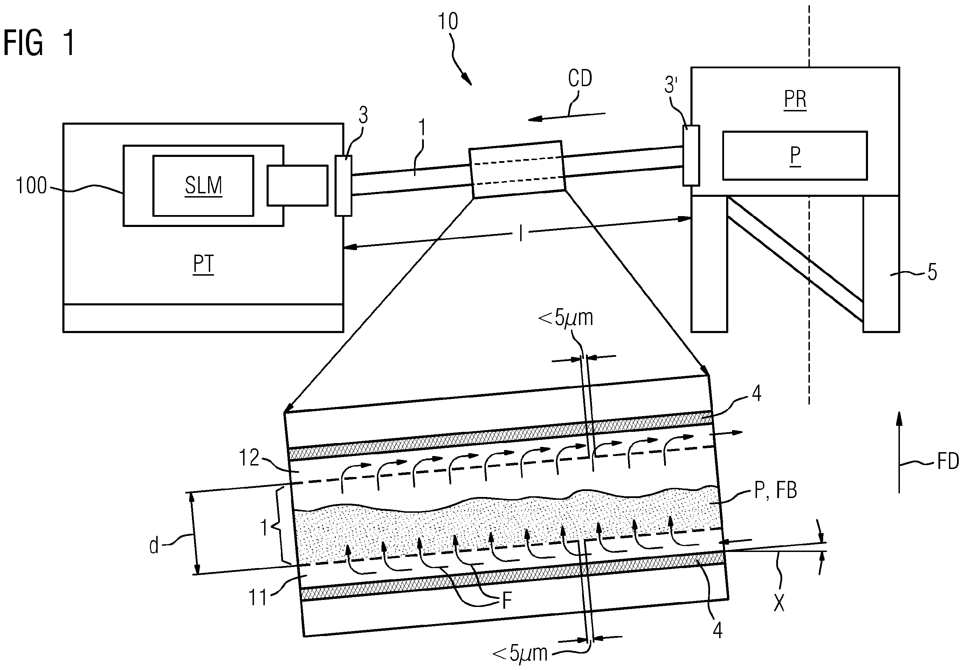

Figure 1 indicates a system 10 for conveying transporting a powder (cf. reference numeral P) in additive manufacturing. On the right, Figure 1 shows a powder reservoir PR, e.g. containing a powder P, e.g. as a base material for the additive manufacture of any component, such as any plastic ceramic or, preferably metallic, component which is suitable to be manufactured out of a powder bed via powder bed fusion.

The component as referred to herein may particularly relate to a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or a similar component.

On the left, Figure 1 shows a powder target PT which is or comprises e.g. an additive manufacturing device 100. Said device may be a device for selective laser melting SLM. Alternatively, said device 100 may be a device for selective laser sintering or electron beam melting. The powder target PT may as well be any other destination into which the powder may be desired to be conveyed or transported.

The system 10 mainly comprises a channel 1 as shown in the middle of Figure 1. The system 10 is preferably a conveying or transportation system for the powder material. Accordingly, the channel 1 is a conveying channel. The system 10 may be a pipe system or channel system.

Said channel 1 connects the powder reservoir PR and the powder target PT. Even though the powder reservoir PR and the powder target PT are shown in Figure 1, said elements are not necessarily comprised by the system 10.

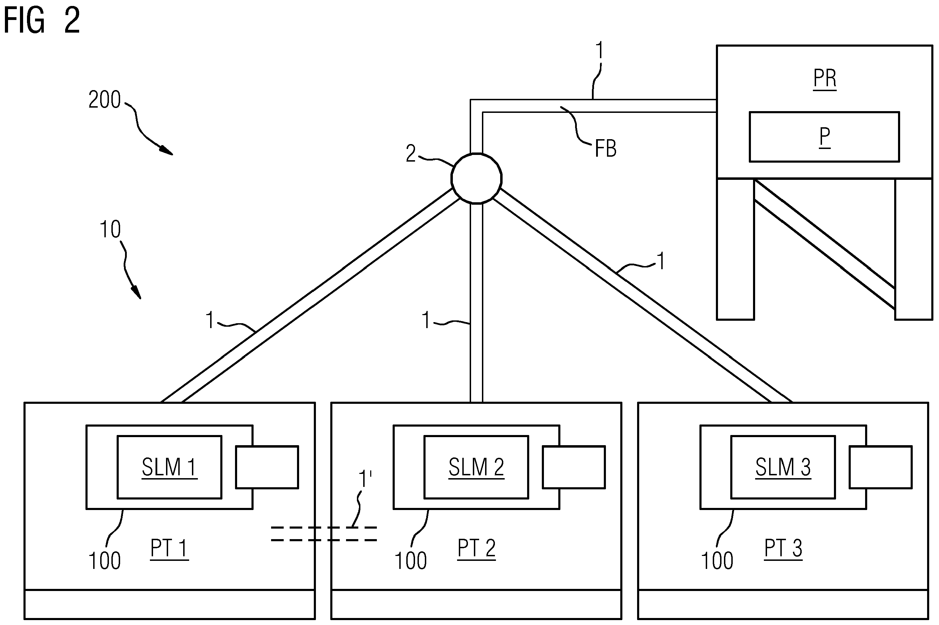

It is shown that the powder reservoir PR, e.g. containing powder P is arranged on a base or platform 5. Particularly said powder reservoir PR may constitute a large and single powder supply for a plurality of additive manufacturing devices, preferably a whole manufacturing plant (cf. Figure 2 below).

The channel 1 is preferably connected to the powder target PT via in adapter 3. Similarly, the channel 1 is preferably connected to the powder reservoir PR via a similar or identical adapter 3'. Said adapters 3, 3' may form or comprise a snap-fit, push-fit or snap engagement means for connecting the channel 1 on both sides or openings. Said adapters 3, 3' are preferably configured for sealing the channel or sealably connecting the channel to the powder reservoir and the powder target in a powder-tight manner in order to avoid any drain or leak of powder into the ambient of the channel 1.

The "ambient" of the channel shall preferably indicate an ambient of the channel including any filter or sealing means, meaning an ambient of the whole system or pipe connection.

The vertical dashed line on the right in Figure 1 shall indicate that the powder reservoir on the right may still be filled manually or at the risk of a dispersion of small particles into the ambient air. The powder reservoir PR is, however, preferably sealed against a shop floor or working space of operators in the additive manufacture (see area on the left of the vertical dashed line in Figure 1). Preferably, within the presented system 10 or plant (cf. reference numeral 100 in Figure 2), the powder reservoir is the only location which needs to be provided with such sealing means, e.g. filters, overpressure ambience, water bubblers, cleanroom measures etc. (cf. also corresponding filter or sealing elements 4 sealing the channel is shown in the lower part of Figure 1). The given filters or sealing means, preferably, prevent any small particle fraction of the powder, e.g. powder particles with diameters of less than 1 micrometer or even down to the nanometer scale, to reach the ambient of the channel 1.

The channel has preferably a length 1 which may allow for a fairly long-range conveyance or transportation of powder. Said length 1 may amount to more than 5 m for example. Preferably said length 1 may amount to 10 m, 20 m or more. Considering an application of the system in an additive manufacturing plant, said long-range conveyance of powder is of course advantageous when a plurality of additive manufacturing machines 100 are located on the shop floor and each of which must be provided with powder P from the powder reservoir PR (cf. also Figure 2).

It is shown in Figure 1, that the powder reservoir PR or as the case may be adapter 3' is located at a slightly higher gravitational potential as compared to the adapter 3 or as the case may be the powder target PT. This allows for implementing a flowing of powder in the channel (from right to left) driven by the gravitational potential, once the powder contained in the powder reservoir and/or the channel is fluidised via a fluid F which is introduced into the channel.

Further details of the channel are shown at the bottom of Figure 1 indicating a section of the channel 1 in more detail. There it is shown that the actual channel 1 is only that one part of the connection (between powder reservoir PR and powder target PT) in which the powder is actually moved/conveyed. The channel 1 is preferably enclosed or surrounded by a filter 4 and/or any other sealing element which effects a complete sealing of the connection between powder reservoir PR and the corresponding powder target PT, so that not even a small particle fraction can enter an ambient of the channel and/or the system 10. When powder tight channel walls are applied, the filter or sealing elements for enclosing the channel 1 may even be dispensed with. In this case, the adapters 3, 3' may need to be sealed in a reliable way.

According to the presented method of conveying the powder, a fluid F, such as an inert gas, preferably nitrogen or argon, is introduced into the conveying channel via a fluid inlet 11. Said fluid inlet 11, preferably, comprises a plurality of inlet holes. Preferably each of said inlet holes or openings measures less than 10 µm, preferably less than 5 µm in order to limit any leakage of powder out of the channel 1. The vast majority of powder particles processed in the given powder bed based manufacturing processes (SLM, EBM) make use of powder with a size fraction from 20 to 80 µm. The dimension of the channel (e.g. diameter smaller than 5 µm) openings is further preferable, as, then, the vast majority of powder particles do not clog the openings.

The fluid F fluidises powder P retained in the channel 1 and/or the powder reservoir PR and effects a transfer of the powder particles from a powdery state into a fluidic (flowable) state, the fluidized bed FB. In the fluidized bed, said powder particles may easily be conveyed or transported. In an advantageous embodiment of the present invention, the powder is preferably conveyed downwards (from right to left, e.g. at a small or shallow angle α of e.g. few degrees, such as 1 to 5° inclined with respect to the horizontal axis x).

As indicated by the arrows at the bottom of the channel 1, the fluid F is preferably led in the channel 1 parallel to a conveying direction CD. The conveying direction CD arises preferably automatically due to the effect of gravity. Once the fluid F is introduced, the powder P in the channel 1, can move along the channel length or (maximum) conveying length 1. Simultaneously, the excess gas or fluid can be led out of the channel or guided upwards via outlet holes 12 and, finally recirculated for a further revolution in closed-loop way.

A diameter d of the channel 1 may amount to 5 cm for example. Said diameter d may as well amount to any value between 5 and 20 cm for an expedient conveyance of powder according to the present invention.

Solely for the sake of simplicity and a better overview, fluid circulation means for generating a fluid stream through the system 10 are not explicitly indicated.

It is also contemplated according to the present invention that besides the channel 1 also the powder reservoir and/or the powder target may be configured to form (at least partly) a fluidised bed, e.g. to an extent that allows for a reliable emptying of the powder reservoir and/or filling of the powder target with powder P.

Figure 2 shows a simplified sketch of an additive manufacturing plant 200 comprising the system 10 as described. According to this embodiment, the plant 200 preferably comprises a plurality of additive manufacturing machines 100 and, preferably, only a single powder reservoir PR.

The system 10 as shown in Figure 2 further comprises a plurality of channels 1 for conveying powder P from the powder reservoir PR to a plurality of powder targets PT. This can be facilitated by applying a cross valve 2 which is preferably as well functioning in a powder-tight way. By a cross valve 2, different powder targets, e.g. in the additive manufacturing machines 100 (cf. SLM 1, SLM 2, SLM 3) or its corresponding powder supplies may be fluidly connected to the powder reservoir in the powder be conveyed or transported accordingly. As indicated by the horizontal dashed connection between the additive manufacturing device SLM 1 and the additive manufacturing device SLM 2, said system can as well be applied between the devices in that a channel 1' connects said devices. According to this embodiment one device may act as a powder reservoir and the other as a powder target.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of conveying a powder (P) for additive manufacturing comprising:
- introducing a fluid (F) into a conveying channel (1), wherein the channel (1) connects a powder reservoir (PR) with a powder target (PT), and thereby
- fluidising a powder (1) retained in the powder reservoir (PR), and
- conveying the fluidised powder (P) through the channel (1) from the powder reservoir (PR) to the powder target (PT) in a powder-tight manner.

2. Method according to claim 1, wherein the fluid (F) is an inert gas, such as nitrogen or argon.

3. Method according to claim 1 or 2, wherein the conveying of the powder (P) is carried out downwards at shallow angle (α) with respect to a horizontal axis (x).

4. Method according to one of the previous claims, wherein the fluid (F) is introduced into the channel (1) at a constant flow rate.

5. Method according to one of the previous claims, wherein a conveying direction (FD) is oriented substantially orthogonal with respect to a fluid flow direction (FD) of the fluid (F).

6. Method according to one of the previous claims, wherein - during or after the conveying of the powder (P) - the fluid (F) is let out of the channel (1) and re-introduced, thereby forming a closed-loop circulation.

7. System (10) for conveying a powder (1) in additive manufacturing comprising at least one conveying channel (1) configured for being connected to a powder reservoir (PR) and/or a powder target (PT), such as an additive manufacturing device (100), wherein the channel (1) is configured to form a fluidized bed (FB) via which the powder (P) can be conveyed from the powder reservoir (PR) to the powder target (PT) according to one of the previous claims.

8. System (10) according to claim 7, wherein the channel (1) is configured to be engaged to the powder reservoir (PR) and/or the powder target (PT) via a push-fit or snap engagement means (3, 3').

9. System (10) according to claim 7 or 8, comprising a powder reservoir adapter (3) and/or a powder target adapter (3') to which the channel (1) is connected, and wherein the powder target adaptor (3') is arranged on a slightly lower gravitational potential as compared to the powder reservoir adapter (3).

10. System (10) according to one of claims 7 to 9, wherein the channel (1) is fluidly connected to a fluid inlet (11) at the bottom, and wherein the channel (1) is fluidly connected to a fluid outlet (12) at the top.

11. System (10) according to claim 10, wherein the inlet (11) and/or the outlet (12) comprise openings with diameters of less than 10 µm each and wherein said inlet (11) and/or outlet (12) extend over largely the whole length (1) of the channel (1).

12. System (10) according to one of claims 7 to 11, wherein a length of the channel (1) defines a conveying length (1) over which the powder (P) can be conveyed by the system (10), and wherein the conveying length (1) exceeds 20 m.

13. System (10) according to one of claims 7 to 12, wherein the channel (1) is sealed against an environment by a filter and/or sealing means (4).

14. System (10) according to one of claims 7 to 13, comprising the powder reservoir (PR) which is as well configured to form a fluidized bed (FB).

15. Additive manufacturing plant (200) comprising the system (10) as claimed in one of claims 7 to 14, wherein the system (10) comprises a plurality of channels (1) for conveying powder (P) from the powder reservoir (PR) to a plurality of powder targets (PT), e.g. via a cross valve (2).
